# EUROPÄISCHE PATENTANMELDUNG

(11) **EP 1 720 357 A1**
(43) Veröffentlichungstag der Anmeldung: **08.11.2006**
(21) Anmeldenummer: 05405336.8
(22) Anmeldetag: 04.05.2005
(51) Int. Cl.: H04N 7/26, H04N 7/36, G02B 27/00, H04N 7/173

(54) **Verfahren und Vorrichtung zur Übermittlung von Videodaten mit Komprimierung basierend auf Blickrichtung nach Augenverfolgungsverfahren**

(71) Anmelder: Swisscom Mobile AG, 3050 Bern (CH)
(72) Erfinder: Ritter, Rudolf, 3052 Zollikofen (CH); Lauper, Eric, 3014 Bern (CH)
(74) Vertreter: Vogel, Dany

(57) **Zusammenfassung**

Für die Übermittlung von Videodaten von einer Zentrale (1) über ein Mobilfunknetz (2) an ein mobiles Endgerät (3) mit einer Anzeigeeinheit (32), wird die Blickrichtung eines Benutzers der Anzeigeeinheit (32) mittels eines Blickrichtungsbestimmungsmoduls (322) der Anzeigeeinheit (32) bestimmt. Die Blickrichtung wird vom Endgerät (3) über das Mobilfunknetz (2) an die Zentrale (1) übermittelt, welche basierend auf der Blickrichtung Korrelationsschwellwerte bestimmt, die positionsabhängig sind. Zudem erzeugt die Zentrale (1) Bitmatrizen, die korrelierende Bildelemente mit korrellerenden Bildelementwerten identifizieren, wobei die korrelierenden Bildelemente abhängig von den Korrelationsschwellwerten bestimmt werden. Die Bitmatrizen werden zusammen mit den Videodaten übermittelt, wobei für korrelierende Bildelemente jeweils nur ein gemeinsames Datenelement mit einem gemeinsamen Bildelementwert übermittelt wird. Durch die Anzeigeeinheit (32) werden basierend auf den Videodaten und den Bitmatrizen Bildsignale wiedergegeben. Durch die blickrichtungsabhängige Wahl der Korrelationsschwellwerte können an Bildelemente, die in der Blickrichtung des Benutzers liegen, höhere Bedingungen an die Korrelation der Bildelementwerte gestellt werden als an Bildelemente, die ausserhalb der Blickrichtung liegen, so dass die zu übermittelnde Datenmenge reduziert werden kann, ohne beim Benutzer die subjektive Wahmehmung der wiedergegebenen Videodaten qualitativ zu beeinträchtigen.

## Beschreibung

### Technisches Gebiet

Die vorliegende Erfindung betrifft ein Verfahren und Vorrichtungen für die Übermittlung von Videodaten, die in einem Bild positionierbare Bildelemente mit Bildelementwerten umfassen, von einer Zentrale über ein Mabilfunknetz an ein mobiles Endgerät. Die vorliegende Erfindung betrifft insbesondere ein Verfahren für die Übermittlung von Videodaten, in welchem die Blickrichtung eines Benutzers mittels eines Blickrichtungsbestimmungsmoduls einer Anzeigeeinheit des mobilen Endgeräts bestimmt wird und in welchem die Blickrichtung vom Endgerät über das Mobilfunknetz an die Zentrale übermittelt wird. Die vorliegende Erfindung betrifft insbesondere auch eine computerbasierte Zentrale, ein mobiles Endgerät und ein Computerprogrammprodukt, welche für die Ausführung des Verfahrens geeignet sind.

### Stand der Technik

In der Patentschrift EP 1 186 148 wird ein System für die Übermittlung von Videodaten von einer Zentrale über ein Telekommunikationsnetz an ein Endgerät beschrieben. Nach EP 1 186 148 umfasst das Endgerät eine Virtuelle Retinale Anzeigevorrichtung, welche den Videodaten entsprechende Bildsignale direkt auf die Retina des Benutzers projiziert. Die Anzeigevorrichtung umfasst zudem ein Blickrichtungsbestimmungsmodul, welche mittels eines so genannten "Eye Trackers" die aktuelle Augenposition (Pupillenposition) als Indikator für die aktuelle Blickrichtung des Benutzers ermittelt. Eine solche Virtuelle Retinale Anzeigevorrichtung wird beispielsweise in der Patentanmeldung WO 94/09472 beschrieben. Die Zentrale nach EP 1 186 148 umfasst ein Filtermodul, welches die Videodaten vor deren Übermittlung auf Grund der aktuellen Blickrichtungen so filtert, dass den Videodaten entsprechende äussere Bildbereiche, welche mittels der Virtuellen Retinalen Anzeigevorrichtung auf der Retina ausserhalb der Fovea projiziert werden, eine geringere Auflösung aufweisen als den Videodaten entsprechende innere Bildbereiche, welche auf die Fovea der Retina projiziert werden. Das System nach EP 1 186 148 nutzt die Eigenschaft des menschlichen Auges aus, dass ein als Fovea bezeichneter kleiner Bereich der Retina, der einen Sehwinkel von ungefähr 2° umfasst, das schärfste Sehvermögen aufweist, und somit die zu übertragende Datenmenge durch Reduktion der Auflösung in äusseren Bildbereichen reduziert werden kann. Insbesondere bei der Übertragung der Videodaten über Mobilfunknetze für die mobile Telefonie, welche über eine wesentlich geringere Bandbreite für die Benutzer verfügen als Breitbandfestnetze, ist eine weitere Reduktion der zu übertragenden Datenmenge erforderlich.

### Darstellung der Erfindung

Es ist eine Aufgabe der vorliegenden Erfindung ein Verfahren und Vorrichtungen für die Übermittlung von Videodaten von einer Zentrale über ein Mobilfunknetz an ein mobiles Endgerät vorzuschlagen, welche eine Reduktion der zu übermittelnden Datenmenge ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zur Übermittlung von Videodaten, welche in einem Bild positionierbare Bildelemente mit Bildelementwerten umfassen, von einer Zentrale über ein Mobilfunknetz an ein mobiles Endgerät mit einer Anzeigeeinheit, eine Blickrichtung eines Benutzers der Anzeigeeinheit mittels eines Blickrichtungsbestimmungsmaduls der Anzeigeeinheit bestimmt wird, dass die Blickrichtung vom Endgerät über das Mobilfunknetz an die Zentrale übermittelt wird, dass in der Zentrale hinsichtlich des Bilds positionsabhängige Korrelationsschwellwerte basierend auf der Blickrichtung bestimmt werden, dass in der Zentrale Bitmatrizen erzeugt werden, die korrelierende Bildelemente mit korrelierenden Bildelementwerten identifizieren, wobei die korrelierenden Bildelemente abhängig von den Korrelationsschwellwerten bestimmt werden, dass die Bitmatrizen zusammen mit den Videodaten übermittelt werden, wobei für korrelierende Bildelemente jeweils ein gemeinsames Datenelement mit einem gemeinsamen Bildelementwert übermittelt wird, und dass Bildsignale durch die Anzeigeeinheit basierend auf den Videodaten und den Bitmatrizen wiedergegeben werden. Die Übermittlung der Videodaten findet insbesondere als sogenanntes "Videostreaming" kontinuierlich fliessend statt. Die Korrelationsschwellwerte für Positionen im Bild werden durch die Zentrale insbesondere jeweils abhängig von einer Distanz einer betreffenden Position im Bild zu einer der Blickrichtung entsprechenden Betrachtungsposition im Bild bestimmt. Die Anzeigeeinheit projiziert die Bildsignale beispielsweise direkt auf mindestens eine Retina des Benutzers. Die Bildwerte umfassen Grauwerte und/oder Farbwerte. Der Vorteil Korrelationsschwellwerte abhängig von der Blickrichtung des Benutzers zu bestimmen besteht darin, dass an Bildelemente, die in der Blickrichtung des Benutzers liegen, höhere Bedingungen an die Korrelation der Bildelementwerte gestellt werden können, als an Bildelemente, die ausserhalb der Blickrichtung liegen. Dadurch ist es möglich, Bildelementwerte von Bildelementen, die ausserhalb der Blickrichtung des Benutzers liegen, auch bei grösseren Unterschieden in den Bildelementwerten in einem gemeinsamen Datenelement zusammenzufassen und damit die Datenmenge der zu übermittelnden Videodaten zu komprimieren, ohne beim Benutzer die subjektive Wahrnehmung der wiedergegebenen Videodaten qualitativ wesentlich zu beeinträchtigen. Insbesondere bei Virtuellen Retinalen Anzeigeeinheiten, welche Bildsignale direkt auf die Retina projizieren, kann die Datenmenge signifikant reduziert werden, da ausserhalb der Blickrichtung liegende Bildelemente in ausserhalb der Fovea liegende Retinabereiche projiziert werden, welche eine geringere Empfindlichkeit aufweisen als die Fovea.

Vorzugsweise umfasst die Erzeugung der Bitmatrizen in der Zentrale eine Identifizierung von im Bild aneinandergrenzenden Bildelementen, die korrelierende Bildelementwerte aufweisen. Wie in der Patentanmeldung WO 03/084205 gezeigt wurde, kann die zur Codierung von Bildelementen notwendige Datenmenge reduziert werden, wenn Bildelemente, die im Bild aneinandergrenzen und korrelierende Bildelementwerte aufinreisen, in einer Bitmatrize angezeigt werden und für die korrelierenden Bildelemente der Bildelementwert nur einmal in einem gemeinsamen Datenelement codiert wird. Wenn die korrelierenden Bildelementwerte unterschiedliche Werte aufweisen, wird der gemeinsame Bildelementwert beispielsweise als Durchschnittswert der korrelierenden Bildelementwerte berechnet.

Vorzugsweise umfasst die Erzeugung der Bitmatrizen in der Zentrale eine Identifizierung von in zeitlich aufeinanderfolgenden Bildern gleich positionierten Bildelementen, die korrelierende Bildelementwerte aufweisen. Da die Wiedergabe von bewegten Bildern im wesentlichen der Wiedergabe einer Sequenz von Bildern (so genannte Vollbilder oder "frames", die hier als Bild bezeichnet werden) entspricht, kann die zur Übermittlung von Videodaten erforderliche Datenmenge reduziert werden, wenn Bildelemente mit korrelierenden Bildelementwerten, die in aufeinanderfolgenden Bildern gleich positioniert sind, in einer Bitmatrize angezeigt werden und deren Bildelementwert nur einmal übermittelt wird. Die Bitmatrizen zeigen die Korrelation der Bildelemente von zwei aufeinanderfolgenden Bildern oder von mehreren aufeinanderfolgenden Bildern an.

In einer Ausführungsvariante werden Bildelementwerte von Bildelementen, die im Bild eine definierte Distanz zu einer der Blickrichtung entsprechenden Betrachtungsposition im Bild aufweisen, von der Zentrale mit einer geringeren Anzahl Bits repräsentiert als Bildelementwerte von Bildelementen bei der Betrachtungsposition. Durch die Reduktion der Bitanzahl für die Codierung von Bildelementwerten für Bildelemente, die ausserhalb der Blickrichtung des Benutzers liegen, kann die Datenmenge der zu übermittelnden Videodaten komprimiert werden, ohne beim Benutzer die subjektive Wahmehmung der wiedergegebenen Videodaten qualitativ wesentlich zu beeinträchtigen.

In einer Ausführungsvariante werden mehrere aneinandergrenzende Bildelemente, die im Bild eine definierte Distanz zu einer der Blickrichtung entsprechenden Betrachtungsposition im Bild aufweisen, von der Zentrale als gemeinsames Bildelement in einem gemeinsamen Datenelement repräsentiert. Durch die Zusammenfassung von aneinandergrenzenden Bildelementen, die ausserhalb der Blickrichtung des Benutzers liegen, wird die geometrische Ausdehnung (Grösse) der Bildelemente erhöht, das heisst die örtliche Auflösung von Bildbereichen ausserhalb der Blickrichtung reduziert, so dass die Datenmenge der zu übermittelnden Videodaten komprimiert wird, ohne beim Benutzer die subjektive Wahmehmung der wiedergegebenen Videodaten qualitativ wesentlich zu beeinträchtigen.

In einer Ausführungsvariante werden Bildelemente, die im Bild eine definierte Distanz zu einer der Blickrichtung entsprechenden Betrachtungsposition im Bild aufweisen, von der Zentrale mit einer reduzierten Emeuerungsfrequenz an das mobile Endgerät übermittelt. Durch die Reduktion der Emeuerungsfrequenz von Bildelementen, die ausserhalb der Blickrichtung des Benutzers liegen, wird die Datenmenge der zu übermittelnden Videodaten komprimiert, ohne beim Benutzer die subjektive Wahmehmung der wiedergegebenen Videodaten qualitativ wesentlich zu beeinträchtigen.

Die vorliegende Erfindung bezieht sich zudem auf ein Computerprogrammprodukt mit Computerprogrammcodemitteln zur Steuerung eines oder mehrerer Prozessoren eines Computers, derart, dass der Computer eine Zentrale zur Ausführung des Verfahrens für die Übermittlung der Videodaten repräsentiert. Das Computerprogrammprodukt umfasst insbesondere ein computerlesbares Medium, das die Computerprogrammcodemittel enthält.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm eines Videodatenübermittlungssystems, welches eine computerbasierte Zentrale umfasst, die über ein Mobilfunknetz mit einem mobilen Endgerät verbindbar ist, das eine Anzeigeeinheit aufweist.
Figur 2 zeigt eine schematische Darstellung eines Beispiels von mehreren zeitlich aufeinanderfolgenden Bildern, welche jeweils mehrere im Bild positionierbare Bildelemente umfassen.
Figur 3 zeigt eine schematische Darstellung eines Beispiels von mehreren Bitmatrizen, die für Bilder der Figur 2 aneinandergrenzende Bildelemente mit korrelierenden Bildelemeniwerten identifizieren.
Figur 4 zeigt eine schematische Darstellung eines Beispiels von mehreren Bitmatrizen, die jeweils für zwei zeitlich aufeinanderfolgende Bilder der Figur 2 gleich positionierte Bildelemente mit korrelierenden Bildelementwerten identifizieren.
Figur 5 zeigt eine schematische Darstellung eines Beispiels von mehreren Bitmatrizen, die jeweils für mehrere zeitlich aufeinanderfolgende Bilder der Figur 2 Bildelemente mit korrelierenden Bildelementwarten identifizieren.
Figur 6 zeigt ein Beispiel eines Ausschnitts aus einem Bild, in welchem verschiedene Komprimierungsbereiche mit unterschiedlicher Distanz zu einer Betrachtungsposition dargestellt werden.

### Wege zur Ausführung der Erfindung

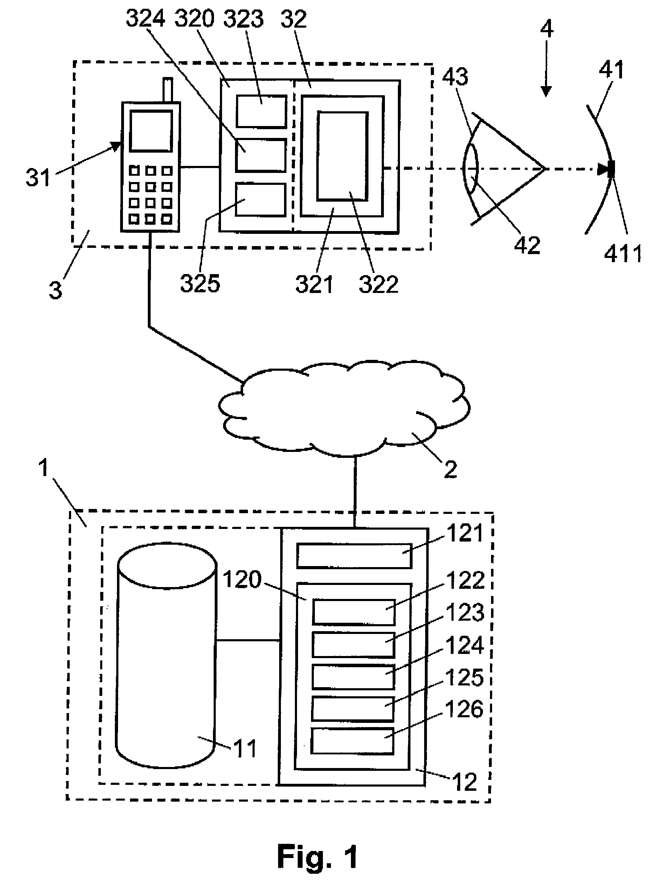

In der Figur 1 bezeichnet das Bezugszeichen 1 eine computerisierte Zentrale, welche eine Videodatenbank 11 mit gespeicherten Videodateien sowie einen Computer mit mehreren Funktionsmodulen umfasst. Die Datenbank 11 ist beispielsweise auf dem Computer 12 oder auf einem separaten Computer ausgeführt. Die Funktionsmodule umfassen ein Datenkomprimierurigsmodul 120, ein Korrelationswertbestimmungsmodul 122, ein Bitmatrizenerzeugungsmodul 123, ein Auflösungsreduktionsmodul 124, ein Bildelementwertreduktionsmodul 125 sowie ein Emeuerungsfrequenzreduktionsmodul 126. Der Computer 12 umfasst insbesondere auch ein Kommunikationsmodul 121 für den Datenaustausch über das Mobilfunknetz 2 mit dem Kommunikationsmodul 31 des mobilen Endgeräts 3. Die Funktionsmodule des Computers 12 sind vorzugsweise als programmierte Softwaremodule zur Steuerung eines oder mehrerer Prozessoren des Computers 12 ausgeführt und auf einem computerlesbaren Medium gespeichert, das fest oder entfembar mit dem Computer 12 verbunden ist. Der Fachmann wird verstehen, dass die Funktionsmodule des Computers 12 teilweise oder vollständig mittels Hardwareelementen ausgeführt werden können.

Das Mobilfunknetz 2 ist beispielsweise ein GSM-Netz (Global System for Mobile Communication), ein UMTS-Netz (Universal Mobile Telecommunications System), ein WLAN-Netz (Wireless Local Area Network), ein UMA-Netz (Unlicensed Mobile Access) oder ein anderes beispielsweise satellitenbasiertes Mobilfunksystem. Der Fachmann wird verstehen, dass das vorgeschlagene Verfahren auch über andere Telekommunikationsnetze, insbesondere über Festnetze anwendbar ist.

Das mobile Endgerät 3 umfasst eine mit dem Kommunikationsmodul 31 verbundene Anzeigeeinheit 32, welche beispielsweise in der Form einer durch den Benutzer tragbaren Sehbrille oder in einer anderen auf dem Kopf tragbaren Form ausgeführt ist. Das Kommunikationsmodul 31 und die Anzeigeeinheit 32 sind beispielsweise in einem gemeinsamen Gehäuse angeordnet, oder sind in separaten Gehäusen angeordnet und über eine drahtlose oder kontaktbasierte Kommunikationsverbindung miteinander verbunden. Wenn das Kommunikationsmodul 31 mit einem eigenen separaten Gehäuse ausgeführt ist, ist das Kommunikationsmodul 31 beispielsweise als Mobilfunktelefon, als PDA (Personal Data Assistant), als Spielstation oder als Laptop-Computer ausgeführt.

Wie in der Figur 1 schematisch dargestellt ist, umfasst das mobile Endgerät 3 einen Funktionsblock 320, der in der Anzeigeeinheit 32 oder im Kommunikationsmodul 31 ausgeführt ist. Der Funktionsblock 320 umfasst mehrere funktionale Module, nämlich ein Blickrichtuhgsrückmeldemodul 323, ein Datendekompressionsmodul 324 sowie ein Datenpuffermodul 325. Die funktionalen Module des Funktionsblocks 320 sind als programmierte Softwaremodule, als Hardwaremodule oder als Kombinationsmodule (Hardware und Software) ausgeführt.

Die Anzeigeeinheit 32 umfasst eine Anzeigevorrichtung 321 sowie ein Blickrichtungsbestimmungsmodul 322. Die Anzeigevorrichtung 321 ist beispielsweise als Virtuelle Retinale Anzeigevorrichtung ausgeführt, welche Bildsignale direkt auf die Retina 41 des Auges 4 des Benutzers projiziert. Das Blickrichtungsbestimmungsmodul 322 umfasst beispielsweise einen so genannten "Eye Tracker" der die Position der Pupille 42 als Indikator für die Blickrichtung des Benutzers ermittelt. Eine Virtuelle Retinale Anzeigevorrichtung mit einem Eye Tracker wird beispielsweise in der Patentanmeldung WO 94/09472 beschrieben. Die Anzeigevorrichtung 321 kann auch als LCD-Anzeigevorrichtung (Liquid Crystal Display) ausgeführt werden, wobei das Blickrichtungsbestimmungsmodul 322 die Blickrichtung auf Grund einer auf die Hornhaut 43 projizierten Lichtreferenzmarkierung und der diesbezüglichen relativen Positionierung der Pupille 42 bestimmt.

Videodaten werden in der Zentrale 1 aus der Datenbank 11 bezogen, durch das Datenkompressionsmodul 120 komprimiert und mittels des Kommunikationsmoduls 121 der Zentrale 1 über das Mobilfunknetz 2 an das Kommunikationsmodul 31 des mobilen Endgeräts 3 übermittelt. Die empfangenen komprimierten Videodaten werden durch das Datendekompressionsmodul 324 dekomprimiert und durch die Anzeigevorrichtung 321 für den Benutzer sichtbar als Bildsignale wiedergegeben. Wie im folgenden beschrieben wird, erfolgt die Datenkompression in der Zentrale 1 auf Grund von Angaben über die Blickrichtung des Benutzers. Die Blickrichtung des Benutzers wird durch das Blickrichtungsbestimmungsmodul 322 bestimmt und durch das Blickrichtungsrückmeldemodul 323 mittels des Kommunikationsmoduls 31 über das Mobilfunknetz 2 an die Zentrale 1 übermittelt.

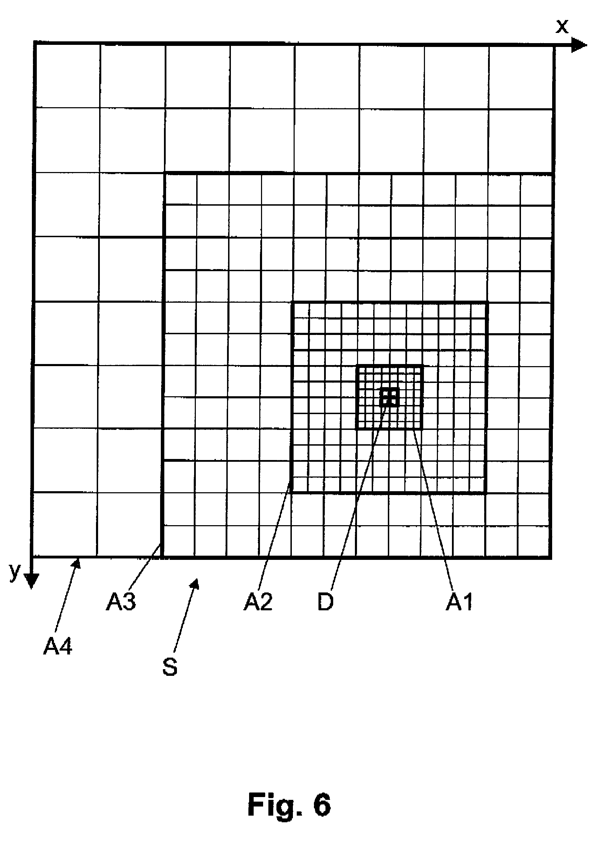

Im Datenkomprimierungsmodul 120 wird auf Grund der empfangenen aktuellen Blickrichtung des Benutzers die aktuelle Blickrichtungsposition im durch die Videodaten definierten Bild bestimmt. In der Figur 6 wird ein Bildausschnitt S gezeigt, in welchem die ermittelte Blickrichtungsposition mit D bezeichnet ist. Die Blickrichtungsposition D bezieht sich auf eine Position zwischen einzelnen Bildelementen oder genau auf einem Bildelement.

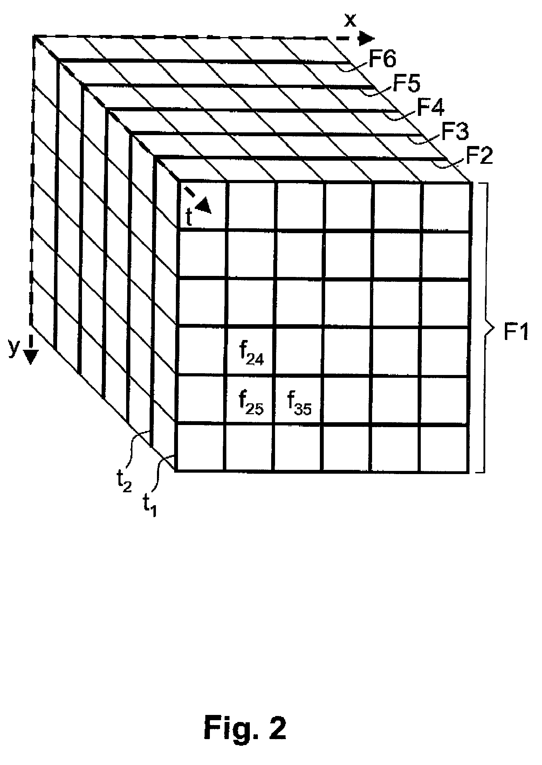

In den Figuren 2, 3, 4, 5 und 6 beziehen sich die Bezugszeichen x und y auf die Koordinatenachsen zur Bestimmung der Positionen von Bildelementen in einem zweidimensionalen Bild, das durch die Videodaten definiert ist. In den Figuren 2, 3, 4 und 5 bezieht sich das Bezugszeichen t auf eine inverse Zeitachse, auf der Objekte auf Grund ihres Zeitrangs dargestellt werden. Das heisst Objekte mit einem hohen Wert auf der Zeitachse t haben einen hohen Zeitrang (z.B. t₁) und müssen zeitlich früher eingestuft werden als Objekte mit einem tieferen Wert auf der Zeitachse t welche einen tieferen Zeitrang (z.B. t₂ oder t₃) aufweisen und zeitlich später eingestuft werden müssen.

In der Figur 2 werden mehrere zeitlich aufeinanderfolgende Bilder F1, F2, F3, F4, F5 und F6 dargestellt, die durch die Videodaten definiert sind. Die Bilder F1, F2, F3, F4, F5, F6 sind vereinfacht mit jeweils sechsunddreissig Bildelementen dargestellt. In der Figur 2 sind einzig die Bildelemente f₂₄, f₂₅ und f₂₆ explizit mit Bezugszeichen versehen, wobei der erste Index die x-Koordinate und der zweite Index die y-Koordinate (der Position) des betreffenden Bildelements im Bild F1, F2, F3, F4, F5, F6 angibt.

Das Korrelationswertbestimmungsmodul 122 bestimmt abhängig von der aktuellen Blickrichtungsposition D unterschiedliche (positionsabhängige) Korrelationsschwellwerte für die Bildelemente. Im wesentlichen werden kleine Korrelationsschwellwerte (d.h. kleine Toleranz) vorgesehen für Bildelemente, die in der Nähe der aktuellen Blickrichtungsposition D positioniert sind, wohingegen grössere Korrelationsschwellwerte (d.h. grössere Toleranz) vorgesehen werden für Bildelemente, die weiter entfernt von der aktuellen Blickrichtungsposition D positioniert sind. Beispielsweise bestimmt das Korrelationswertbestimmungsmodul 122 abhängig von der Distanz zur aktuellen Blickrichtungsposition D verschiedene Komprimierungsbereiche A1, A2, A3, A4, welche mit grösserer Distanz zur Blickrichtungsposition D einen grösseren Korrelationsschwellwert aufweisen. Die Korrelationsschwellwerte werden als absolute oder proportionale Zahlenwerte angegeben. Beispielsweise werden Bildelementen im Komprimierungsbereich A1 ein Korrelationsschwellwert mit dem Wert Null (Nulltoleranz) zugeordnet, für den Komprimierungsbereich A2 wird ein Korrelationsschwellwert 10% vorgesehen, für den Komprimierungsbereich A2 20% und für den Komprimierungsbereich A3 40%. In diesem Beispiel dürfte der Unterschied der Bildelementwerte von Bildelementen im Komprimierungsbereich A3 bis zu 40% betragen, um als korrelierende Bildelemente definiert zu werden.

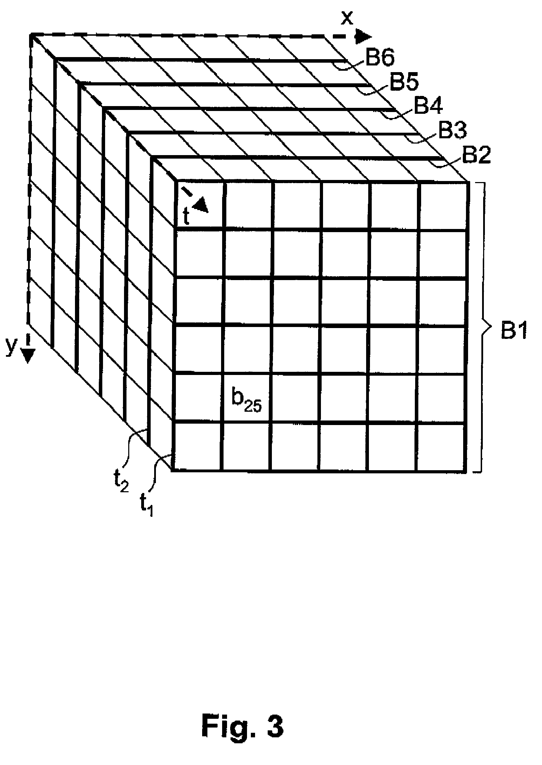

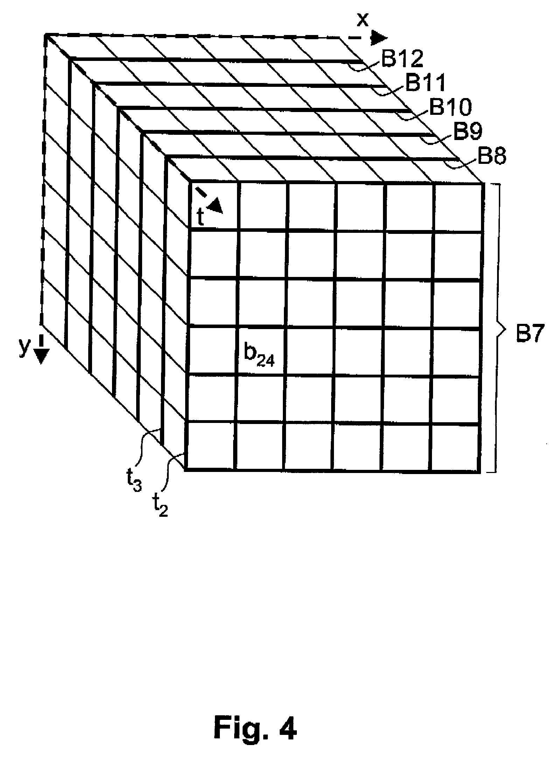

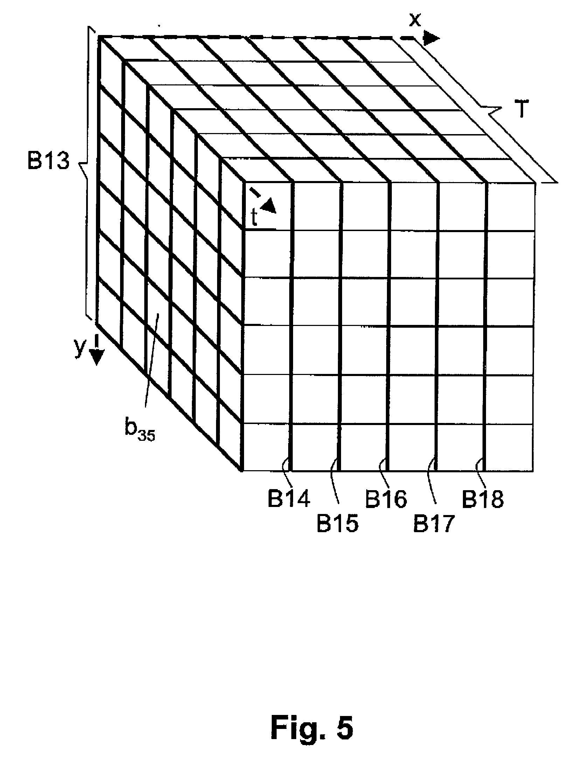

Auf Grund der bestimmten aktuellen Korrelationsschwellwerte erzeugt das Bitmatrizenerzeugungsmodul 123 Bitmatrizen, welche korrelierende Bildelemente mit korrelierenden Bildelementwerten identifizieren. Die Erzeugung durch das Bitmatrizenerzeugungsmodul 123 von Bitmatrizen, die korrelierende, in einem Bild aneinandergrenzende Bildelemente identifizieren, wird nachfolgend mit Bezug zur Figur 3 beschrieben. Die Erzeugung durch das Bitmatrizenerceugungsmodul 123 von Bitmatrizen, die korrelierende Bildelemente in zeitlich aufeinanderfolgenden Bildern identifizieren, wird danach mit Bezug zu den Figuren 4 und 5 beschrieben.

In der Figur 3 werden mehrere zeitlich aufeinanderfolgende Bitmatrizen B1, B2, B3, B4, B5 und B6 dargestellt. Entsprechend den vereinfachten Bildern F1, F2, F3, F4, F5, F6 der Figur 2 sind die Bitmatrizen B1, B2, B3, B4, B5, B6 vereinfacht mit jeweils sechsunddreissig Bits dargestellt. In der Figur 3 ist einzig das Bit b₂₅ explizit mit Bezugszeichen versehen, wobei die Indizes die x/y-Koordinaten (Position) des Bits in der Bitmatrix B1, B2, B3, B4, B5, B6 angeben und das Bildelement im Bild F1, F2, F3, F4, F5, F6 bestimmen, auf das sich das Bit bezieht. Die Bitmatrix B1 mit dem Zeitrang t₁ ist beispielsweise dem Bild F1 mit dem Zeitrang t₁ zugeordnet und identifiziert Bildelemente im Bild F1 deren Bildelementwert miteinander korrelieren. Die Bitmatrizen B1, B2, B3, B4, B5 und B6 werden beispielsweise nach dem in WO 03/084205 beschriebenen Verfahren erzeugt, wobei hier jedoch für die Bestimmung der Korrelation benachbarter Bildelemente die aktuellen ermittelten positionsabhängigen Korrelationsschwellwerte verwendet werden. Es wird die Korrelation in der horizontalen Richtung ermittelt. Dabei werden die Bildelemente identifiziert, die im Bild F1, F2, F3, F4, F5, F6 auf einer Geraden parallel zur x-Achse liegen, aneinandergrenzen und korrelierende Bildelementwerte aufweisen. Zudem wird die Korrelation in der vertikalen Richtung ermittelt. Dabei werden die Bildelemente identifiziert, die im Bild F1, F2, F3, F4, F5, F6 auf einer Geraden parallel zur y-Achse liegen, aneinandergrenzen und korrelierende Bildelementwerte aufweisen. Die resultierenden Bitmatrizen für die horizontale und vertikale Korrelation werden durch eine logische ODER-Operation miteinander kombiniert, so dass die Bitmatrizen B1, B2, B3, B4, B5 und B6 resultieren. Wenn benachbarte Bildelemente in verschiedenen Komprimierungsbereichen A1, A2, A3, A4 liegen und unterschiedliche Korrelationsschwellwerte aufweisen, wird beispielsweise immer der höhere oder immer der tiefere Korrelationsschwellwert angewandt. Für korrelierende Bildelemente wird der Bildelementwert in den komprimierten Videodaten nur einmal in einem gemeinsamen Datenelement codiert, beispielsweise als (arithmetischer) Durchschnitt der korrelierenden Datenelementwerte. Ein anzeigendes Bit (z.B. ein als "1" gesetztes Bit) in den Bitmatrizen B1, B2, B3, B4, B5 und B6 identifiziert die Position im zugeordneten Bild F1, F2, F3, F4, F5, F6, wo der Wechsel von einem ersten gemeinsamen Bildelementwert korrelierender Bildelemente auf den nächsten gemeinsamen Bildelementwert korrelierender Bildelemente stattfindet.

In der Figur 4 werden mehrere zeitlich aufeinanderfolgende Bitmatrizen B7, B8, B9, B10, B11 und B12 dargestellt. Entsprechend den vereinfachten Bildern F1, F2, F3, F4, F5, F6 der Figur 2 sind die Bitmatrizen B7, B8, B9, B10, B11, B12 vereinfacht mit jeweils sechsunddreissig Bits dargestellt. In der Figur 4 ist einzig das Bit b₂₄ explizit mit Bezugszeichen versehen, wobei die Indizes die x/y-Koordinaten (Position) des Bits in der Bitmatrix B7, B8, B9, B10, B11, B12 angeben und das Bildelement im Bild F1, F2, F3, F4, F5, F6 bestimmen, auf das sich das Bit bezieht. Die Bitmatrix B7 mit dem Zeitrang t₂ ist beispielsweise dem Bild F2 mit dem Zeitrang t₂ zugeordnet und identifiziert Bildelemente im Bild F2 deren Bildelementwerte jeweils mit einem Bildelementwert eines gleich positionierten Bildelements im zeitlich vorausgehenden Bild F1 mit dem Zeitrang t₁ korreliert (abhängig von den bestimmten aktuellen positionsabhängigen Korrelationsschwellwerten). Wenn ein Bit in der Bitmatrix B7, B8, B9, B10, B11, B12 anzeigend (z.B. auf den Wert "1" gesetzt) ist, bedeutet dies, dass der Bildelementwert des betreffenden Bildelements im neuen Bild mit dem Bildelementwert des gleich positionierten Bildelements im vorausgehenden Bild korreliert und somit der Bildelementwert in den komprimierten Videodaten für das neue Bild nicht enthalten ist. Zum Beispiel identifiziert das Bit b₂₄ in der Bitmatrix B7 das Bildelement f₂₄ im Bild F2, dessen Bildelementwert mit dem Bildelementwert des Bildelements f₂₄ im Bild F1 korreliert (abhängig vom aktuellen Korrelationsschwellwert für das Bildelement f₂₄). Wenn folglich das Bit b₂₄ in der Bitmatrix B7 gesetzt ist, so ist der Bildefementwert des Bildelements f₂₄ im Bild F2 nicht in den Videodaten enthalten, da er bereits durch den Bildelementwert des Bildelements f₂₄ im Bild F1 bestimmt ist.

In der Figur 5 werden mehrere Bitmatrizen B13, B14, B15, B16, B17 und B18 dargestellt, die sich jeweils auf eine definierte Gruppe von Bildelementen in mehreren zeitlich aufeinanderfolgenden Bildern F1, F2, F3, F4, F5, F6 innerhalb eines definierten Zeitintervalls T beziehen. Die Bitmatrizen B13, B14, B15, B16, B17, B18 beziehen sich auf Bildelemente, die in Ebenen parallel zur Ebene des t/y-Koordinatensystems liegen, wobei für jeden Wert des Bilds in der x-Richtung eine Bitmatrize vorgesehen ist, die Bildelemente mit korrelierenden Bildelementwerten identifiziert. Die Bitmatrizen B13, B14, B15, B16, B17, B18 sind vereinfacht mit jeweils sechsunddreissig Bits dargestellt. In der Figur 5 ist einzig das Bit b₃₅ explizit mit Bezugszeichen versehen, wobei der erste Index die t-Koordinate (Zeitrang) und der zweite Index die y-Koordinate (Position) des betreffenden Bildelements im Bild F1, F2, F3, F4, F5, F6 angibt. Die Bitmatrix B13 identifiziert beispielsweise diejenigen korrelierenden Bildelemente, die einen x-Koordinatenwert von Null aufweisen, innerhalb des Zeitintervalls T liegen und in der t/y-Ebene aneinandergrenzen. Die Bitmatrizen B13, B14, B15, B16, B17 und B18 werden wie bei der Bestimmung korrelierender Bildelemente, die innerhalb eines Bilds aneinandergrenzen, erzeugt. Es werden jedoch für die Bestimmung der korrelierenden Bildelemente Bildelemente untersucht, die in einer Ebene benachbart sind, die durch mehrere zeitlich aufeinanderfolgende Bilder verläuft. Mit anderen Worten, in der horizontalen Richtung wird die Korrelation von Bildelementen untersucht, die innerhalb des Zeitintervalls T auf einer Geraden parallel zur Zeitachse t liegen. In der vertikalen Richtung wird die Korrelation von Bildelementen untersucht, die innerhalb des Zeitintervalls T auf einer Geraden parallel zur y-Achse liegen. Anschliessend werden die resultierenden Bitmatrizen für die horizontale und vertikale Komelation durch eine logische ODER-Operation miteinander kombiniert, so dass die Bitmatrizen B13, B14, B15, B16, B17 und B18 resultieren. Für komelierende Bildelemente wird der Bildelementwert in den komprimierten Videodaten wiederum nur einmal in einem gemeinsamen Datenelement codiert, beispielsweise als (arithmetischer) Durchschnitt der korrelierenden Datenelementwerte. Ein anzeigendes Bit (z.B. ein als "1" gesetztes Bit) in den Bitmatrizen B13, B14, B15, B16, B17 und B18 identifiziert die Position in den zugeordneten Bildelementen der zeitlich aufeinanderfolgenden Bilder F1, F2, F3, F4, F5, F6, wo der Wechsel von einem ersten gemeinsamen Bildelementwert korrelierender Bildelemente auf den nächsten gemeinsamen Büdelementwert korrelierender Bildelemente stattfindet.

Der Fachmann wird verstehen, dass die Erzeugung von Bitmatrizen basierend auf blickrichtungsabhängigen Korrelationsschwellwerten auf Bildelementwerte sowohl in der Form eines Grauwerts als auch in der Form eines Farbwerts anwendbar ist, wobei bei RGB-Videodaten (Rot, Grün, Blau) jeder Farbwert als separater Bildelementwert behandelt wird.

Für die Bestimmung von korrelierenden Bildelementen in zeitlich aufeinanderfolgenden Bildern (nach Figur 4 oder 5) können andere Korrelationsschwellwerte bestimmt und angewandt werden als für die Bestimmung von korrelierenden Bildelementen, die in einem Bild aneinandergrenzen (nach Figur 3).

Durch das Auflösungsreduktionsmodul 124 werden Bildelemente abhängig von der aktuellen Blickrichtungsposition D mit unterschiedlicher (positionsabhängiger) Auflösung codiert. Im wesentlichen werden grosse Auflösungen (d.h. kleine Bildelementgrössen) vorgesehen für Bildelemente, die in der Nähe der aktuellen Blickrichtungsposition D positioniert sind, wohingegen kleinere Auflösungen (d.h. grössere Bildelementgrössen) vorgesehen werden für Bildelemente, die weiter entfernt von der aktuellen Blickrichtungsposition D positioniert sind. Mit anderen Worten, mehrere aneinandergrenzende kleine Bildelemente, werden ab einer definierten Distanz zu der Blickrichtungsposition D als gemeinsame Bildelemente in einem gemeinsamen Datenelement repräsentiert.

Das Bildelementwertreduktionsmodul 125 bestimmt abhängig von der aktuellen Blickrichtungsposition D eine unterschiedliche (positionsabhängige) Anzahl von Bits für die Codierung der Bildelementwerte. Im wesentlichen wird eine grössere Anzahl Bits vorgesehen für Bildelementwerte von Bildelementen, die in der Nähe der aktuellen Blickrichtungsposition D positioniert sind, als für Bildelementwerte von Bildelementen, die weiter entfernt von der aktuellen Blickrichtungsposition D positioniert sind.

Das Erneuerungsfrequenzreduktionsmodul 126 bestimmt abhängig von der aktuellen Blickrichtungsposition D eine unterschiedliche (positionsabhängige) Emeuerungsfrequenz für die Übermittlung von Bildelementen. Im wesentlichen wird eine grössere Emeuerungsfrequenz vorgesehen für Bildelementwerte von Bildelementen, die in der Nähe der aktuellen Blickrichtungsposition D positioniert sind, als für Bildelementwerte von Bildelementen, die weiter entfernt von der aktuellen Blickrichtungsposition D positioniert sind.

Die Emeuerungsfrequenz für die Übermittlung von Bildelementen, die Anzahl Bits für die Codierung der Bildelementwerte und/oder die Auflösung der Bildelemente werden beispielsweise abhängig von den oben mit Bezug zu Figur 6 erwähnten Komprimierungsbereichen A1, A2, A3, A4 gewählt. An dieser Stelle soll klar festgehalten werden, dass die in der Figur 6 dargestellten Grössen der Komprimierungsbereiche A1, A2, A3, A4 nur als illustrierende Beispiele und nicht einschränkend zu verstehen sind. Verschiedene Grössen der Kompnmierungsbereiche A1, A2, A3, A4 können für die Bestimmung der Korrelationsschwellwerte, die Anzahl Bits für Codierung der Bildelementwerte, die Auflösung der Bildelemente und/oder der Emeuerungsfrequenz definiert werden.

Die komprimierten Videodaten mit den Bitmatrizen und den Datenelementen, die gemeinsame Bildelementwerte korrelierender Bildelemente enthalten, werden im mobilen Endgerät 3 entgegengenommen und im Datenpuffermodul 325 zwischengespeichert.

Die empfangenen komprimierten Videodaten werden durch das Datendekompressionsmodul 324 auf Grund der zugeordneten Bitmatrizen auf eine Sequenz von darstellbaren Bildern dekomprimiert, die von der Anzeigevorrichtung 322 dem Benutzer als Bildsignale wiedergegeben werden. Bildelemente unterschiedlicher Grösse (Auflösung) werden beispielsweise auf Grund von Grössenangaben auf das darstellbare Bild abgebildet. Um Bildelementwerte Bildelementen zuordnen zu können, die in zeitlich aufeinanderfolgenden Bildern positioniert sind, werden mindestens die zur Bestimmung des aktuellen darstellbaren Bilds notwendigen Videodaten im Datenpuffermodul 325 zwischengespeichert. Korrelierende Bildelemente in nachfolgenden Bildelementen werden auf Grund der zugeordneten Bildmatrizen bestimmt und die betreffenden Bildelementwerte aus den zwischengespeicherten Videodaten bezogen. Für Bitmatrizen, die Bildelemente in mehreren zeitlich aufeinanderfolgenden Bildern betreffen, werden mindestens die empfangen Videodaten für das Zeitintervall T im Datenpuffermodul 325 zwischengespeichert.

## Patentansprüche

1. Verfahren zur Übermittlung von Videodaten, welche in einem Bild (F1) positionierbare Bildelemente mit Bildelementwerten umfassen, von einer Zentrale (1) über ein Mobilfunknetz (2) an ein mobiles Endgerät (3) mit einer Anzeigeeinheit (32), umfassend:
Bestimmung einer Blickrichtung eines Benutzers der Anzeigeeinheit (32) mittels eines Blickrichtungsbestimmungsmoduls (322) der Anzeigeeinheit (32), und
Übermittlung der Blickrichtung vom Endgerät (3) über das Mobilfunknetz (2) an die Zentrale (1),
**gekennzeichnet durch**:
Bestimmung in der Zentrale (1) von hinsichtlich des Bilds (F1) positionsabhängigen Korrelationsschwellwerten basierend auf der Blickrichtung.
Erzeugung in der Zentrale (1) von Bitmatrizen (B1, B7) die korrelierende Bildelemente mit korrelierenden Bildelementwerten identifizieren, wobei die korrelierenden Bildelemente abhängig von den Korrelationsschwellwerten bestimmt werden,
Übermittlung der Bitmatrizen (B1, B7) zusammen mit den Videodaten, wobei für korrelierende Bildelemente jeweils ein gemeinsames Datenelement mit einem gemeinsamen Bildelementwert übermittelt wird, und
Wiedergabe von Bildsignalen **durch** die Anzeigeeinheit (32) basierend auf den Videodaten und den Bitmatrizen (B1, 57).

2. Verfahren nach Anspruch 1, **dadurch gekennzeichnet, dass** die Erzeugung der Bitmatrizen (B1) in der Zentrale (1) eine Identifizierung von im Bild (F1) aneinandergrenzenden Bildelementen mit korrelierenden Bildelementwerten umfasst.

3. Verfahren nach einem der Ansprüche 1 oder 2, **dadurch gekennzeichnet, dass** die Erzeugung der Bitmatrizen (B7) in der Zentrale (1) eine Identifizierung von in zeitlich aufeinanderfolgenden Bildern (F1, F2) gleich positionierten Bildelementen mit korrelierenden Bildelementwerten umfasst.

4. Verfahren nach einem der Ansprüche 1 bis 3, **dadurch gekennzeichnet, dass** die Bildelementwerte von Bildelementen, die im Bild (F1) eine definierte Distanz zu einer der Blickrichtung entsprechenden Betrachtungsposition (D) im Bild aufweisen, von der Zentrale (1) mit einer geringeren Anzahl Bits repräsentiert werden als Bildelementwerte von Bildelementen bei der Betrachtungsposition.

5. Verfahren nach einem der Ansprüche 1 bis 4, **dadurch gekennzeichnet, dass** mehrere aneinandergrenzende Bildelemente, die im Bild (F1) eine definierte Distanz zu einer der Blickrichtung entsprechenden Betrachtungsposition (D) im Bild (F1) aufweisen, von der Zentrale (1) als gemeinsames Bildelement in einem gemeinsamen Datenelement repräsentiert werden.

6. Verfahren nach einem der Ansprüche 1 bis 5, **dadurch gekennzeichnet, dass** Bildelemente, die im Bild (F1) eine definierte Distanz zu einer der Blickrichtung entsprechenden Betrachtungsposition (D) im Bild aufweisen, von der Zentrale (9) mit einer reduzierten Erneuerungsfrequenz an das mobile Endgerät (3) übermittelt werden.

7. Verfahren nach einem der Ansprüche 1 bis 6, **dadurch gekennzeichnet, dass** die Zentrale (1) die Korrelationsschwellwerte für Positionen im Bild (F1) jeweils abhängig von einer Distanz einer betreffenden Position im Bild (F1) zu einer der Blickrichtung entsprechenden Betrachtungsposition (D) im Bild (F1) bestimmt, dass die Anzeigeeinheit (32) die Bildsignale direkt auf mindestens eine Retina (41) des Benutzers projiziert, und dass die Bildwerte Grauwerte und/oder Farbwerte umfassen.

8. Computerbasierte Zentrale (1), die eingerichtet ist zur Übermittlung von Videodaten, welche in einem Bild (F1) positionierbare Bildelemente mit Bildelementwerten umfassen, über ein Mobilfunknetz (2) an ein mobiles Endgerät (3) mit einer Anzeigeeinheit (32), und zum Entgegennehmen einer Blickrichtung eines Benutzers der Anzeigeeinheit (32) über das Mobilfunknetz (2) vom Endgerät (3), **gekennzeichnet durch**:
Mittel zur Bestimmung von hinsichtlich des Bilds (F1) positionsabhängigen Korrelationsschwellwerten basierend auf der Blickrichtung,
Mittel zur Erzeugung von Bitmatrizen (B1, B7), die korrelierende Bildelemente mit korrelierenden Bildelementwerten identifizieren, wobei die korrelierenden Bildelemente abhängig von den Korrelationsschwellwerten bestimmt werden, und
Mittel zur Übermittlung der Bitmatrizen (B1, B7) zusammen mit den Videodaten an das Endgerät (3) für die Wiedergabe auf der Anzeigeeinheit (32), wobei für korrelierende Bildelemente jeweils ein gemeinsames Datenelement mit einem gemeinsamen Bildelementwert übermittelt wird.

9. Zentrale (1) nach Anspruch 8, **dadurch gekennzeichnet, dass** die Mittel zur Erzeugung der Bitmatrizen (B1 eingerichtet sind im Bild (F1) aneinandergrenzende Bildelemente mit korrelierenden Bildelementwerten zu identifizieren.

10. Zentrale (1) nach einem der Ansprüche 8 oder 9, **dadurch gekennzeichnet, dass** die Mittel zur Erzeugung der Bitmatrizen (B7) eingerichtet sind, in zeitlich aufeinanderfolgenden Bildern (F1, F2) gleich positionierte Bildelemente mit korrelierenden Bildelementwerten zu identifizieren.

11. Zentrale (1) nach einem der Ansprüche 8 bis 10, **dadurch gekennzeichnet, dass** die Zentrale (1) Mittel umfasst, um Bildelementwerte von Bildelementen, die im Bild (F1) eine definierte Distanz zu einer der Blickrichtung entsprechenden Betrachtungsposition (D) im Bild aufweisen, mit einer geringeren Anzahl Bits zu repräsentieren als Bildelementwerte von Bildelementen bei der Betrachtungsposition (D).

12. Zentrale (1) nach einem der Ansprüche 8 bis 11, **dadurch gekennzeichnet, dass** die Zentrale (1) Mittel umfasst, um mehrere aneinandergrenzende Bildelemente, die im Bild (F1) eine definierte Distanz zu einer der Blickrichtung entsprechenden Betrachtungsposition (D) im Bild (F1) aufweisen, als gemeinsames Bildelement in einem gemeinsamen Datenelement zu repräsentieren.

13. Zentrale (1) nach einem der Ansprüche 8 bis 12, **dadurch gekennzeichnet, dass** die Zentrale (1) Mittel umfasst, um Büdelementwerte von Bildelementen, die im Bild (F1) eine definierte Distanz zu einer der Blickrichtung entsprechenden Betrachtungsposition (D) im Bild (F1) aufweisen, mit einer reduzierten Emeuerungsfrequenz an das mobile Endgerät (3) zu übermitteln.

14. Zentrale (1) nach einem der Ansprüche 8 bis 13, **dadurch gekennzeichnet, dass** die Mittel zur Bestimmung der Kornelationsschwellwerte eingerichtet sind, die Korrelationsschwellwerte für Positionen im Bild jeweils abhängig von einer Distanz einer betreffenden Position im Bild (F1) zu einer der Blickrichtung entsprechenden Betrachtungsposition (D) im Bild (F1) zu bestimmen, und dass die Bildwerte Grauwerte und/oder Farbwerte umfassen.

15. Mobiles Endgerät (3) mit einer Anzeigeeinheit (32), welches eingerichtet ist Videodaten, welche in einem Bild (F1) positionierbare Bildelemente mit Bildelementwerten umfassen, über ein Mobilfunknetz (2) von einer Zentrale (1) entgegenzunehmen, umfassend ein Blickrichtungsbestimmungsmodul (322) zur Bestimmung einer Blickrichtung eines Benutzers der Anzeigeeinheit (32), und Mittel zur Übermittlung der Blickrichtung über das Mobilfunknetz (2) an die Zentrale (1), **gekennzeichnet durch**:
Mittel zum Entgegennehmen von Bildmatrizen (B1, B7), die korrelierende Bildelemente mit korrelierenden Bildelementwerten identifizieren, zusammen mit den Videodaten von der Zentrale (1) über das Mobilfunknetz (2), wobei die Videodaten für korrelierende Bildelemente jeweils ein gemeinsames Datenelement mit einem gemeinsamen Bildelementwert umfassen, und
Mittel zur Wiedergabe von Bildsignalen über die Anzeigeeinheit (32) basierend auf den Videodaten und den Bitmatrizen.

16. Endgerät (3) nach Anspruch 15, **dadurch gekennzeichnet, dass** das Endgerät (3) Mittel umfasst zum Zuordnen eines in einem gemeinsamen Datenelement enthaltenen Bildelementwerts zu aneinandergrenzenden Bildelementen im Bild (F1) basierend auf der Bildmatrize (B1), die dem Bild (F1) zugeordnet ist.

17. Endgerät (3) nach einem der Ansprüche 15 oder 16, **dadurch gekennzeichnet, dass** das Endgerät (3) Mittel umfasst zum Zuordnen eines in einem gemeinsamen Datenelement enthaltenen Bildelementwerts zu gleich positionierten Bildelementen in zeitlich aufeinanderfolgenden Bildern (F1, F2) basierend auf der Bildmatrize (B7), die den Bildern zugeordnet ist.

18. Endgerät (3) nach einem der Ansprüche 15 bis 17, **dadurch gekennzeichnet, dass** die Anzeigeeinheit (32) eingerichtet ist, die Bildsignale direkt auf mindestens eine Retina (41) des Benutzers zu projizieren, und dass die Bildwerte Grsuwerte und/oder Farbwerte umfassen.

19. Computerprogrammprodukt umfassend Computerprogrammcodemittel zur Steuerung eines Computers (12), der eingerichtet ist zur Übermittlung von Videodaten, welche in einem Bild (F1) positionierbare Bildelemente mit Bildelementwerten umfassen, über ein Mobilfunknetz (2) an ein mobiles Endgerät (3) mit einer Anzeigeeinheit (32), und zum Entgegennehmen einer Blickrichtung eines Benutzers der Anzeigeeinheit (32) über das Mobitfunknetz (2) vom Endgerät (3), derart, dass der Computer (12) eine computerbasierte Zentrale (1) nach einem der Ansprüche 8 bis 14 ausführt.

## Geänderte Patentansprüche

### Geänderte Patentansprüche gemäss Regel 86(2) EPÜ.

**1.** Verfahren zur Übermittlung von Videodaten, welche in einem Bild (F1) positionierbare Bildelemente mit Bildelementwerten umfassen, von einer Zentrale (1) über ein Mobilfunknetz (2) an ein mobiles Endgerät (3) mit einer Anzeigeeinheit (32), umfassend:
Bestimmung einer Blickrichtung eines Benutzers der Anzeigeeinheit (32) mittels eines Blickrichtungsbestimmungsmoduls (322) der Anzeigeeinheit (32), und
Übermittlung der Blickrichtung vom Endgerät (3) über das Mobilfunknetz (2) an die Zentrale (1),
**gekennzeichnet durch**:
Bestimmung in der Zentrale (1) von hinsichtlich des Bilds (F1) positionsabhängigen Korrelationsschwellwerten basierend auf der Blickrichtung,
Erzeugung in der Zentrale (1) von Bitmatrizen (B1, B7) die korrelierende Bildelemente mit korrelierenden Bildelementwerten identifizieren, wobei die korrelierenden Bildelemente abhängig von den Korrelationsschwellwerten und Unterschieden in den Bildelementwerten bestimmt werden,
Übermittlung der Bitmatrizen (B1, B7) zusammen mit den Videodaten, wobei in den Videodaten für korrelierende Bildelemente jeweils ein gemeinsames Datenelement mit einem gemeinsamen Bildelementwert übermittelt wird, und
Wiedergabe von Bildsignalen **durch** die Anzeigeeinheit (32) basierend auf den Videodaten und den Bitmatrizen (B1, B7).

**2.** Verfahren nach Anspruch 1, **dadurch gekennzeichnet, dass** die Erzeugung der Bitmatrizen (B1) in der Zentrale (1) eine Identifizierung von im Bild (F1) aneinandergrenzenden Bildelementen mit korrelierenden Bildelementwerten umfasst.

**3.** Verfahren nach einem der Ansprüche 1 oder 2, **dadurch gekennzeichnet, dass** die Erzeugung der Bitmatrizen (B7) in der Zentrale (1) eine Identifizierung von in zeitlich aufeinanderfolgenden Bildern (F1, F2) gleich positionierten Bildelementen mit korrelierenden Bildelementwerten umfasst.

**4.** Verfahren nach einem der Ansprüche 1 bis 3, **dadurch gekennzeichnet, dass** die Bildelementwerte von Bildelementen, die im Bild (F1) eine definierte Distanz zu einer der Blickrichtung entsprechenden Betrachtungsposition (D) im Bild aufweisen, von der Zentrale (1) mit einer geringeren Anzahl Bits repräsentiert werden als Bildelementwerte von Bildelementen bei der Betrachtungsposition.

**5.** Verfahren nach einem der Ansprüche 1 bis 4, **dadurch gekennzeichnet, dass** mehrere aneinandergrenzende Bildelemente, die im Bild (F1) eine definierte Distanz zu einer der Blickrichtung entsprechenden Betrachtungsposition (D) im Bild (F1) aufweisen, von der Zentrale (1) als gemeinsames Bildelement in einem gemeinsamen Datenelement repräsentiert werden.

**6.** Verfahren nach einem der Ansprüche 1 bis 5, **dadurch gekennzeichnet, dass** Bildelemente, die im Bild (F1) eine definierte Distanz zu einer der Blickrichtung entsprechenden Betrachtungsposition (D) im Bild aufweisen, von der Zentrale (1) mit einer reduzierten Emeuerungsfrequenz an das mobile Endgerät (3) übermittelt werden.

**7.** Verfahren nach einem der Ansprüche 1 bis 6, **dadurch gekennzeichnet, dass** die Zentrale (1) die Korrelationsschwellwerte für Positionen im Bild (F1) jeweils abhängig von einer Distanz einer betreffenden Position im Bild (F1) zu einer der Blickrichtung entsprechenden Betrachtungsposition (D) im Bild (F1) bestimmt, dass die Anzeigeeinheit (32) die Bildsignale direkt auf mindestens eine Retina (41) des Benutzers projiziert, und dass die Bildwerte Grauwerte und/oder Farbwerte umfassen.

**8.** Computerbasierte Zentrale (1), die eingerichtet ist zur Übermittlung von Videodaten, welche in einem Bild (F1) positionierbare Bildelemente mit Bildelementwerten umfassen, über ein Mobilfunknetz (2) an ein mobiles Endgerät (3) mit einer Anzeigeeinheit (32), und zum Entgegennehmen einer Blickrichtung eines Benutzers der Anzeigeeinheit (32) über das Mobilfunknetz (2) vom Endgerät (3), **gekennzeichnet durch**:
Mittel zur Bestimmung von hinsichtlich des Bilds (F1) positionsabhängigen Korrelationsschwellwerten basierend auf der Blickrichtung,
Mittel zur Erzeugung von Bitmatrizen (B1, B7), die korrelierende Bildelemente mit korrelierenden Bildelementwerten identifizieren, wobei die korrelierenden Bildelemente abhängig von den Korrelationsschwellwerten und Unterschieden in den Bildelementwerten bestimmt werden, und
Mittel zur Übermittlung der Bitmatrizen (B1, B7) zusammen mit den Videodaten an das Endgerät (3) für die Wiedergabe auf der Anzeigeeinheit (32), wobei in den Videodaten für korrelierende Bildelemente jeweils ein gemeinsames Datenelement mit einem gemeinsamen Bildelementwert übermittelt wird.

**9.** Zentrale (1) nach Anspruch 8, **dadurch gekennzeichnet, dass** die Mittel zur Erzeugung der Bitmatrizen (B1 eingerichtet sind im Bild (F1) aneinandergrenzende Bildelemente mit korrelierenden Bildelementwerten zu identifizieren.

**10.** Zentrale (1) nach einem der Ansprüche 8 oder 9, **dadurch gekennzeichnet, dass** die Mittel zur Erzeugung der Bitmatrizen (B7) eingerichtet sind, in zeitlich aufeinanderfolgenden Bildern (F1, F2) gleich positionierte Bildelemente mit korrelierenden Büdeiementwerten zu identifizieren.

**11.** Zentrale (1) nach einem der Ansprüche 8 bis 10, **dadurch gekennzeichnet, dass** die Zentrale (1) Mittel umfasst, um Bildelementwerte von Bildelementen, die im Bild (F1) eine definierte Distanz zu einer der Blickrichtung entsprechenden Betrachtungsposition (D) im Bild aufweisen, mit einer geringeren Anzahl Bits zu repräsentieren als Bildelementwerte von Bildelementen bei der Betrachtungsposition (D).

**12.** Zentrale (1) nach einem der Ansprüche 8 bis 11, **dadurch gekennzeichnet, dass** die Zentrale (1) Mittel umfasst, um mehrere aneinandergrenzende Bildelemente, die im Bild (F1) eine definierte Distanz zu einer der Blickrichtung entsprechenden Betrachtungsposition (D) im Bild (F1) aufweisen, als gemeinsames Bildelement in einem gemeinsamen Datenelement zu repräsentieren.

**13.** Zentrale (1) nach einem der Ansprüche 8 bis 12, **dadurch gekennzeichnet, dass** die Zentrale (1) Mittel umfasst, um Bildelementwerte von Bildelementen, die im Bild (F1) eine definierte Distanz zu einer der Blickrichtung entsprechenden Betrachtungsposition (D) im Bild (F1) aufweisen, mit einer reduzierten Emeuerungsfrequenz an das mobile Endgerät (3) zu übermitteln.

**14.** Zentrale (1) nach einem der Ansprüche 8 bis 13, **dadurch gekennzeichnet, dass** die Mittel zur Bestimmung der Korrelationsschwellwerte eingerichtet sind, die Korrelationsschwellwerte für Positionen im Bild jeweils abhängig von einer Distanz einer betreffenden Position im Bild (F1) zu einer der Blickrichtung entsprechenden Betrachtungsposition (D) im Bild (F1) zu bestimmen, und dass die Bildwerte Grauwerte und/oder Farbwerte umfassen.

**15.** Mobiles Endgerät (3) mit einer Anzeigeeinheit (32), welches eingerichtet ist Videodaten, welche in einem Bild (F1) positionierbare Bildelemente mit Bildelementwerten umfassen, über ein Mobilfunknetz (2) von einer Zentrale (1) entgegenzunehmen, umfassend ein Blickrichtungsbestimmungsmodul (322) zur Bestimmung einer Blickrichtung eines Benutzers der Anzeigeeinheit (32), und Mittel zur Übermittlung der Blickrichtung über das Mobilfunknetz (2) an die Zentrale (1), **gekennzeichnet durch**:
Mittel zum Entgegennehmen von Bildmatrizen (B1, B7), die korrelierende Bildelemente mit korrelierenden Bildelementwerten identifizieren, zusammen mit den Videodaten von der Zentrale (1) über das Mobilfunknetz (2), wobei die Videodaten für korrelierende Bildelemente jeweils ein gemeinsames Datenelement mit einem gemeinsamen Bildelementwert umfassen, und
Mittel zur Wiedergabe von Bildsignalen über die Anzeigeeinheit (32) basierend auf den Videodaten und den Bitmatrizen.

**16.** Endgerät (3) nach Anspruch 15, **dadurch gekennzeichnet, dass** das Endgerät (3) Mittel umfasst zum Zuordnen eines in einem gemeinsamen Datenelement enthaltenen Bildelementwerts zu aneinandergrenzenden Bildelementen im Bild (F1) basierend auf der Bildmatrize (B1), die dem Bild (F1) zugeordnet ist.

**17.** Endgerät (3) nach einem der Ansprüche 15 oder 16, **dadurch gekennzeichnet, dass** das Endgerät (3) Mittel umfasst zum Zuordnen eines in einem gemeinsamen Datenelement enthaltenen Bildelementwerts zu gleich positionierten Bildelementen in zeitlich aufeinanderfolgenden Bildern (F1, F2) basierend auf der Bildmatrize (B7), die den Bildern zugeordnet ist.

**18.** Endgerät (3) nach einem der Ansprüche 15 bis 17, **dadurch gekennzeichnet, dass** die Anzeigeeinheit (32) eingerichtet ist, die Bildsignale direkt auf mindestens eine Retina (41) des Benutzers zu projizieren, und dass die Bildwerte Grauwerte und/oder Farbwerte umfassen.

**19.** Computerprogrammprodukt umfassend Computerprogrammcodemittel zur Steuerung eines Computers (12), der eingerichtet ist zur Übermittlung von Videodaten, welche in einem Bild (F1) positionierbare Bildelemente mit Bildelementwerten umfassen, über ein Mobilfunknetz (2) an ein mobiles Endgerät (3) mit einer Anzeigeeinheit (32), und zum Entgegennehmen einer Blickrichtung eines Benutzers der Anzeigeeinheit (32) über das Mobilfunknetz (2) vom Endgerät (3), derart, dass der Computer (12) eine computerbasierte Zentrale (1) nach einem der Ansprüche 8 bis 14 ausführt.
